(19) **Europäisches Patentamt / European Patent Office / Office européen des brevets**

(11) **EP 3 156 966 A1**

(12) **EUROPEAN PATENT APPLICATION**

(43) Date of publication:
**19.04.2017 Bulletin 2017/16**

(51) Int Cl.:
***G06T 3/40*** *(2006.01)*

(21) Application number: **16153977.0**

(22) Date of filing: **02.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.10.2015 IN 5482CH2015**

(71) Applicant: **Wipro Limited**
**560 035 Karnataka (IN)**

(72) Inventors:
• **SHARMA, Priyanshu**
**560034 Karnataka (IN)**
• **DHANDAPANI, Vignesh Prabu Singanallur**
**560076 Karnataka (IN)**
• **SATHYANARAYANA, Kiran Kumar Channarayapatna**
**560070 Karnataka (IN)**

(74) Representative: **Finnegan Europe LLP**
**16 Old Bailey**
**London EC4M 7EG (GB)**

(54) **METHOD AND DEVICE FOR GENERATING PANORAMIC IMAGES WITH REAL-TIME ANNOTATIONS**

(57) The present disclosure relates to a method for generating panoramic images with real-time annotations. In an embodiment, an image annotation device is present within the computing device. The image annotation device receives a plurality of frames of an environment and identifies one or more region of interest (ROI) in the plurality of frames.

The image annotation device further captures one or more annotations and sensory data with respect to the one or more ROI and combines each of the plurality of frames along with the one or more annotations and sensory data to generate panoramic images with real-time annotations.

Fig.2

## Description

### FIELD OF THE DISCLOSURE

The present subject matter is related in general to panoramic image capturing, and more particularly, but not exclusively to a method and device for generating panoramic images with real-time annotations.

### BACKGROUND

The panoramic images are used for providing elongated field of view. With advancement in digital technology, users can capture large areas and produce a virtual impression of what is being viewed by them in a single image. In the current techniques, the panoramic images are preferably used for personal use and are thus rather limited in functionality.

The panoramic images used today, involve explaining the objects or people in the panoramic image, or providing a detailed text regarding each object in the panoramic image. Due to the limited functionality of current technologies, the situation becomes more complex for instance when a virtual tour is required around a large area requiring numerous panoramas and which has to be shown in a sequence.

Thus, the panoramic images created using existing techniques are very tedious and time consuming for instance in the situations where a virtual tour has to be presented. Also, in the existing techniques when one or more panoramas are combined, there is a huge possibility of overlapping which results in great amount of information loss. Hence creating efficient panoramic images with real-time annotations is challenging.

### SUMMARY

Disclosed herein is the method and device for generating panoramic images with real-time annotations. This is achieved by using an image annotation device which may be integrated within a computing device. The image annotation device receives a plurality of frames of an environment for which a panoramic view with annotations has to be generated. The image annotation device further identifies one or more region of interest which has to be annotated. In an embodiment, one or more region of interest is identified automatically by the image annotation device. In another embodiment, the identification is done manually by the user of the computing device. The image annotation device captures one or more real-time annotations and sensory data and combines each of the frames along with one or more captured real-time annotations and sensory data to generate a panoramic image with real-time annotations. The image annotation device t determines and corrects any overlaps in the frame to be stitched by using the Laplace of Gaussian feature and hence provide a panoramic image with real-time annotations.

In one embodiment, the present disclosure relates to a method of generating panoramic images with real-time annotations. The method comprises receiving, a plurality of frames of an environment by an image annotation device. The method further identifies one or more Regions of Interest (ROI) in the plurality of frames either by the image annotation device or by the user of the computing device. Further, the image annotation device captures one or more annotations and sensory data with respect to the one or more ROI of the plurality of frames. On receiving the annotation and sensory data the image annotation device combines each of the plurality of frames along with the one or more annotations and the sensory data to generate panoramic images with real-time annotations.

In one embodiment, there is provided a method for generating panoramic images with real-time annotations, the method comprising: receiving, by an image annotation device, a plurality of frames of an environment; identifying, by an image annotation device, one or more Regions of Interest (ROI) in the plurality of frames; capturing, by an image annotation device, one or more annotations and sensory data with respect to the one or more ROI of the plurality of frames; and combining, by an image annotation device, each of the plurality of frames along with the one or more annotations and the sensory data to generate panoramic images with real-time annotations.

In an embodiment, combining each of the plurality of frames along with the one or more annotations and the sensory data comprises: determining, by an image annotation device, overlap of the one or more ROI during combining each of the plurality of frames; and correcting, by an image annotation device, the overlap of the one or more ROI by using Laplace of Gaussian (LoG) values of the plurality of frames, ROI masks and overlap threshold.

In another embodiment, the present disclosure relates to an image annotation device for generating panoramic images with real-time annotations. The image annotation device comprises a processor and a memory communicatively coupled to the processor, wherein the memory stores processor executable instructions, which, on execution, causes the image annotation device to receive a plurality of frames of an environment. The processor further causes the image annotation device or the user to identify one or more Region of Interest (ROI) in the plurality of frames. The image annotation device further captures one or more annotations and sensory data with respect to one or more ROI .Thereafter, the processor causes the image annotation device to combine each of the plurality of frames along with one or more annotations and sensory data for generating panoramic images with real-time annotations.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE ACCOMPANYING DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Fig.1 shows an exemplary environment for generating panoramic images with real-time annotations in accordance with some embodiments of the present disclosure;

Fig.2 shows a detailed block diagram illustrating an image annotation device in accordance with some embodiments of the present disclosure;

Fig.3 shows a flowchart illustrating a method for stitching a plurality of frames in accordance with some embodiments of the present disclosure;

Fig.4 illustrates a flowchart showing a method for generating panoramic images with real-time annotations in accordance with some embodiments of present disclosure; and

Fig.5 illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The present disclosure relates to a method for generating panoramic images with real-time annotations. The method comprises receiving a plurality of frames of an environment by an image annotation device (hereinafter referred to as image annotation unit) from the image capturing unit present in a computing device. The computing device can include, but is not limited to, mobile phones, computers, laptops, cameras etc. Further, the image annotation unit identifies one or more Region of Interest (ROI) in the plurality of frames. In an embodiment, the identification of ROI may also be done by user manually. Based on the ROI, the image annotation unit captures one or more real-time annotations and the sensory data for the identified region of interest. On receiving the one or more real-time annotations and sensory data, the image annotation unit combines each of the plurality of frames along with the one or more annotations and sensory data for generating a panoramic image with real-time annotations. Further, the image annotation unit corrects any overlaps occurred during combining the one or more frames. In such a way, the image annotation unit generates a panoramic image with real-time annotations.

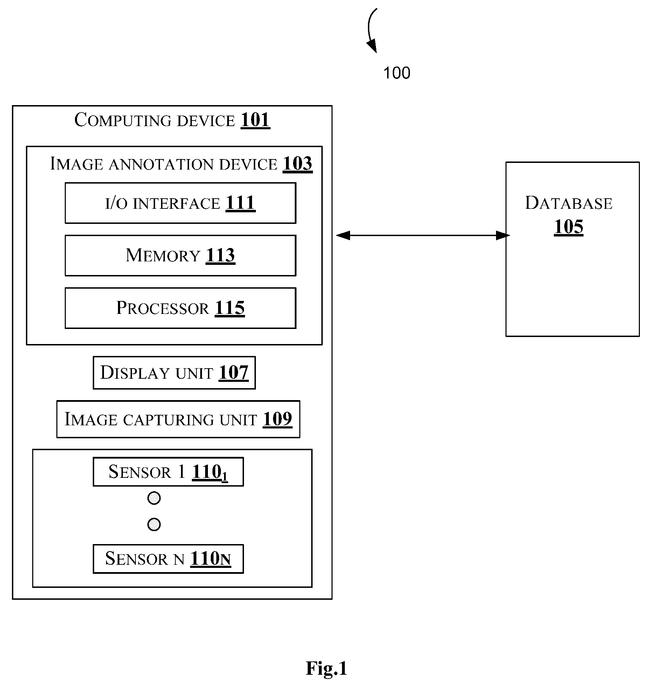

Fig.1 shows an exemplary environment illustrating for generating panoramic images with real-time annotations in accordance with some embodiments of the present disclosure.

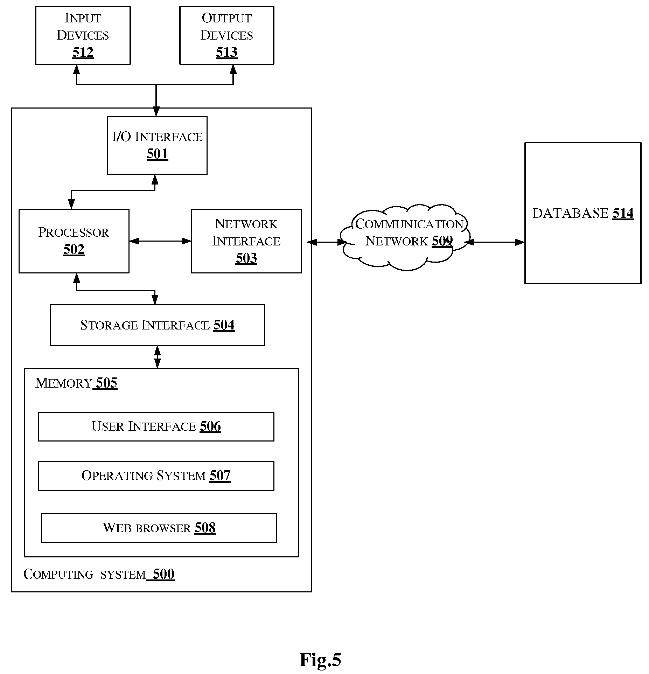

As shown in **Fig.1,** the environment **100** comprises a computing device **101** which consists of an image annotation unit (or image annotation device) **103** , a display unit **107,** an image capturing unit **109** and one or more sensors, sensor **110₁** ........sensor **110_N** (collectively referred as sensors **110**). In an embodiment, the display unit **107** can also be present outside the computing device **101**. The computing device **101** is further connected to a database **105**. In one embodiment, the database can be present inside the computing device **101**. In another embodiment the database **105** is either connected directly to the computing device **101** or through a wired or wireless communication network (not shown in fig.1, covered in fig.5). The computing device **101** can include computers, laptops, cameras, mobile phones which can be used for capturing panoramic images. The computing device **101** is configured to capture a panoramic images or an image with 360 degree view.

As shown in **Fig.1,** the computing device **101** consists of an image annotation unit 103 which is used for generating panoramic images with real-time annotations. In an embodiment, a user of the computing device **101** may capture a plurality of frames of an environment using the image capturing unit **109** of the computing device **101**. Each of the captured frames of the environment is rendered on the display unit **107** present in the computing device **101**. A panoramic view indicates a wide angle view of the area surrounding a user wherein the angle could be up to 360 degree and hence would be a combination of frames. The image annotation unit **103** identifies one or more Region of Interest (ROI) in the plurality of frames. These regions of interest (ROI) are the objects which the user wishes to annotate while generating a panoramic view. For annotating one or more ROI, the user is provided with default masks. The default masks are selected by the user and stored for later use. In an embodiment, there can be multiple masks on each frame as there can be multiple ROI. Using the masks selected, Laplace of Gaussian (LoG) value for each of the ROI is calculated by the image annotation unit **103**. The LoG filter called as derivative filter, which is used to find areas of rapid changes in a frame of an image. Further, zero crossing of the LoG of every frame containing the ROI is calculated by the image annotation unit **103**. Based on the LoG value, unique ROI identifiers are calculated for the identified region of interest. The ROI identifiers are later used at the time of stitching for correction if any ROI are overlapped. The ROI identifiers are the zero crossing of LoG of the ROI. On identification of the ROI, the image annotation unit **103** further captures one or more annotations and sensory data with respect to the one or more ROI of the plurality of frames. The term "sensory data" is preferably used herein to refer to dynamic parameters associated with objects within the environment. The dynamic parameters are preferably determined from data obtained from the sensors **110** of the image capturing unit **109**. The term "annotations" is preferably used herein to include metadata to be embedded or attached to an image. The annotations can include text, e.g. in the form of a comment or explanation, for use in describing the image or ROI. In an embodiment, the image annotation unit **103** implements Speech To Text (STT) and Text To Speech (TTS) techniques for real-time annotations. The STT and TTS are used when the annotations is given by user by speaking through microphone and also for rendering the panoramic image for watching by the user.

In an embodiment, the sensory data includes, but is not limited to, at least one of gyroscope data and accelerometer data. The annotation of each frame is provided by the user and captured by the image annotation unit **103** along with the default masks selected. In an embodiment, the image annotation unit **103** also identifies, using the OCR algorithm, certain object of interest which are present in the database **105** and prompts the user for annotating the identified object of interest. The image annotation unit **103** further combines each of the plurality of frames along with the annotation and sensory data for generating panoramic images with real-time annotation. The image annotation unit **103** also determines and corrects any overlaps occurred during combining of plurality of frames using ROI masks, LoG and overlap threshold.

The image annotation unit **103** comprises an I/O interface **111,** a memory **113** and a processor **115**. The I/O interface **111** is configured to receive the plurality of frames captured by the image capturing unit **109** of the computing device **101**. The I/O Interface **111** also receives one or more annotation and sensory data for annotating the plurality of frames. The one or more sensory data is provided by the sensors **110**. The I/O interface **111** is also configured to receive the information from the database **105** for retrieving objects of interest which are stored for future reference and the one or more ROI selected by a user.

The received information from the I/O interface **111** is stored in the memory **113**. The memory **113** is communicatively coupled to the processor **115** of the computing device **101**. The processor **115** of the computing device **101** causes the image annotation unit **103** of the computing device **101** to receive plurality of frames of an environment. The image annotation unit **103** identifies one or more region of interest (ROI) in the plurality of frames. On identifying one or more ROI, the processor **115** of the computing device **101** causes image annotation unit **103** to captures one or more annotations and sensory data corresponding to one or more ROI of plurality of frames. Once the annotation and sensory data is acquired, the image annotation unit **103** further combines each of the plurality of frames along with the annotations and sensory data for generating panoramic images with real-time annotations.

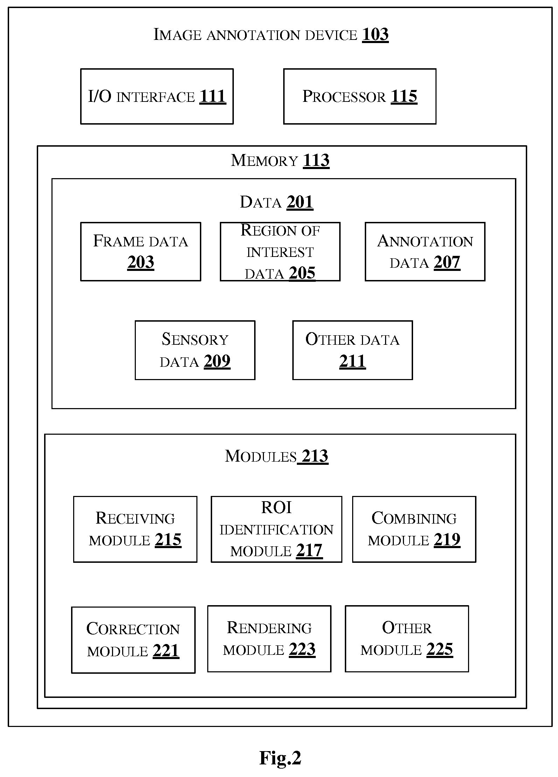

**Fig.2** shows a detailed block diagram illustrating an image annotation unit in accordance with some embodiments of the present disclosure.

In the illustrated **fig.2,** the one or more data **201** and the one or more modules **213** stored in the memory **111** are described herein in detail. In an embodiment, the data **201** includes frame data **203,** region of interest data **205,** annotation data **207,** sensory data **209** and other data **211** for generating panoramic image with real-time annotations.

The frame data **203** comprises plurality of frames of an environment which are received by the image annotation unit **103** of the computing device **101.** The frame data **203** also comprises information about the plurality of frames. For generating a panoramic view, a plurality of frames for an environment are captured and stored on the frame data **203** of the computing device **101.** Each of the captured frames is stored with a unique frame number in the frame data **203.**

The Region of Interest (ROI) data **205** comprises the objects of interest of the plurality of frames of an environment. The Region of Interest data can be anything ranging from a table to fire alarm, art works, and an engine depending on the environment. In an embodiment, the Region of Interest is either selected manually by the user of the computing device **101** or provided by the image annotation unit **103** from the database **105.** The Region Of Interest data **205** also comprises the defaults masks details along with the ROI identifiers which are used for calculating the LoG values associated with each frame. The default mask is used for identification of the Region Of Interest. The default masks make use of the LoG value calculated, which is defined for an image with intensity value 'I' as:

$$ L(x, y) = \delta^2 I/\delta x^2 + \delta^2 I/\delta y^2 $$

Where,

> x and y define the boundary of the default mask selected.

The annotation data **207** comprises the real-time annotations corresponding to the one or more ROI in the plurality of frames received from the user. There can be multiple annotations in a frame with respect to multiple ROI. The annotations for the one or more ROI can include, but is not limited to text, sound, video text, audio etc.

The sensory data **209** comprises the data associated with one or more sensors **110** including, but not limited to, gyroscope and/or accelerometer for identifying an object of interest. The sensory data **209** also comprises location information which is used for identifying similar objects uniquely.

The other data **211** may store data, including temporary data and temporary files, generated by modules for performing the various functions of the image annotation unit **103.**

In an embodiment, the one or more data **201** in the memory **113** are processed by the one or more modules **213** of the image annotation unit **103.** The one or more modules **213** may be stored within the memory **113** as shown in **Figure 2.** In an example, the one or more modules **213,** communicatively coupled to the processor **115,** may also be present outside the memory **113** and implemented as hardware. As used herein, the term module refers to an application specific integrated circuit (ASIC), an electronic circuit, a processor **115** (shared, dedicated, or group) and memory that execute one or more software or firmware programs, a combinational logic circuit, and/or other suitable components that provide the described functionality.

In one implementation, the one or more modules **213** may include, for example, a receiving module **215,** a ROI identification module **217,** a combining module **219,** a correction (or correcting) module **221,** and rendering module **223.** The memory **113** may also comprise other modules **225** to perform various miscellaneous functionalities of the image annotation unit **103.** It will be appreciated that such aforementioned modules may be represented as a single module or a combination of different modules.

In an embodiment, the receiving module **215** receives the plurality of frames captured by the image capturing unit **109** of the computing device **101** for generating panoramic image. The receiving module **215** also receives information on one or more ROI and the corresponding masks for the frame. The receiving module **215** also receives one or more annotations with respect to one or more ROI selected in the plurality of frames. The receiving module **215** also receives information on sensory data **209** corresponding to the ROI.

The ROI identification module **217** is configured to identify one or more ROI from the computing device **101.** In an embodiment, the ROI of a frame is provided by the user of the computing device **101** at the time of capturing the frames. In another embodiment, the ROI identification module **217** identifies the defaults masks and calculates the ROI identifiers used for highlighting the ROI. The identified default masks and the calculated ROI are used for correction purposes. Further the ROI identification module **217** calculates the LoG value with respect to each of the masks identified.

The combining module **219** is configured to combine each of the plurality of frames along with the one or more annotations and the sensory data **209** received. The plurality of the frames captured along with the annotation and sensory data are stitched to form a panoramic image.

The correction module **221** determines the possibilities of any overlaps occurring between one or more stitched frames. There can be possibilities of the ROI's defined, to occur at the boundaries of the frame and overlap. Upon determining overlaps, the correction module **221** corrects the overlaps, if any. The correction module

221 uses the ROI identifier during stitching for calculating an overlapping percentage which determines an area of overlapping and corrects the overlapping between two frames.

The rendering module 223 renders the panoramic image created with real-time annotations. For rendering the panoramic images, an application may be used. This application can be based on standards including, but not limiting to, OpenGL, 3D/2D etc. The rendering module 223 is also configured for object searching. During the ROI annotation process, the ROI is marked with the default masks. This marking is used for searching the object from a panoramic image.

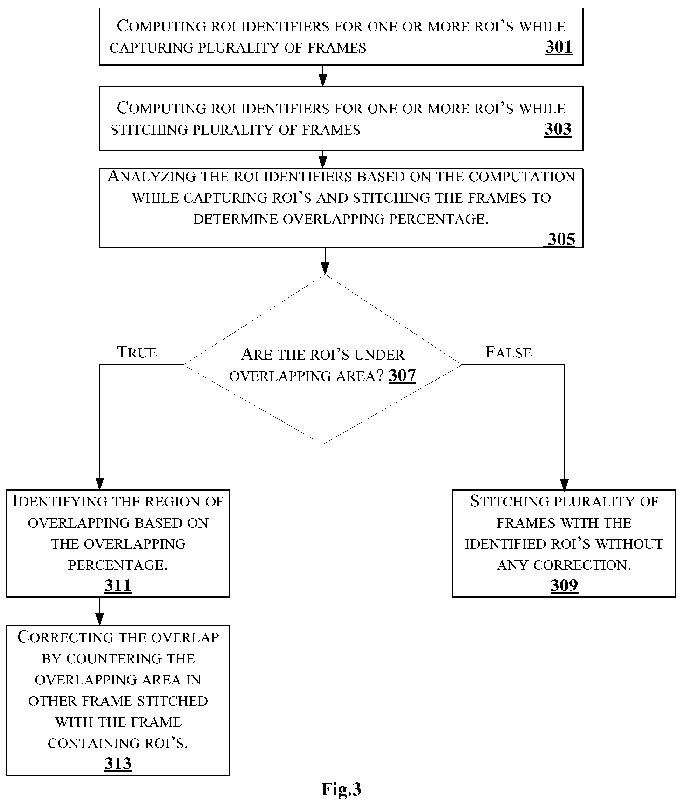

Fig.3a shows a flowchart illustrating a method for stitching a plurality of frames in accordance with some embodiments of the present disclosure.

As illustrated in Fig.3, the method comprises one or more blocks for correcting any overlaps occurred while stitching a plurality of frames. A panoramic image with real-time annotations is generated by capturing one or more frames of an environment by using a computing device 101. The computing device 101 consists of an image annotation unit 103 which is used for generating panoramic images with real-time annotations. The image annotation unit 103 receives a plurality of frames from the computing device 101. In order to annotate a particular object, the image annotation unit 103 identifies one or more region of interest. In one embodiment, the region of interest is determined automatically by the image annotation unit 103. In other embodiment, the region of interest is identified by the user manually. The identified region of interest (ROI) is annotated by using the real-time annotations provided by the user. The annotations may be a text, audio video etc.

At block 301, ROI identifiers are computed for one or more ROI's at the time of capturing plurality of frames. The ROI identifier is the zero crossing of LoG of the ROI's in the frame.

At block 303, ROI identifiers are computed for one or more ROI's while stitching plurality of frames. In an embodiment, each frame may contain one or more ROI.

At block 305, the ROI identifiers computed while capturing the one or more frames and stitching the one or more frames are analysed. Based on the analysis, an overlapping percentage is identified to determine whether the ROI's is in overlapping area or not.

For example, if frame is 100*100 pixels and an overlapping percentage is found to be 10%, then 10 pixels of the frame is considered as the overlapping area.

At block 307, if the ROI's does not fall under overlapping area, the method proceeds to block 309. Alternatively, if the ROI's falls under overlapping area, the method proceeds to block 311.

At block 309, stitching of the plurality of frames with the ROI's is performed on identifying the absence of overlap. Particularly, if the ROI does not fall under overlapping area, the frames are stitched without any correction.

At block 311, identification of overlapping area is done based on the overlapping percentage.

At block 313, correcting the overlaps by countering the overlapping area in the other frame which is stitched with the frame containing the ROI's is performed. The correction is done by selecting a common area in the frames to be stitched. Further, the common areas are stitched ensuring that the ROI's are intact. Hence the frames are stitched along with the ROI's without any overlaps.

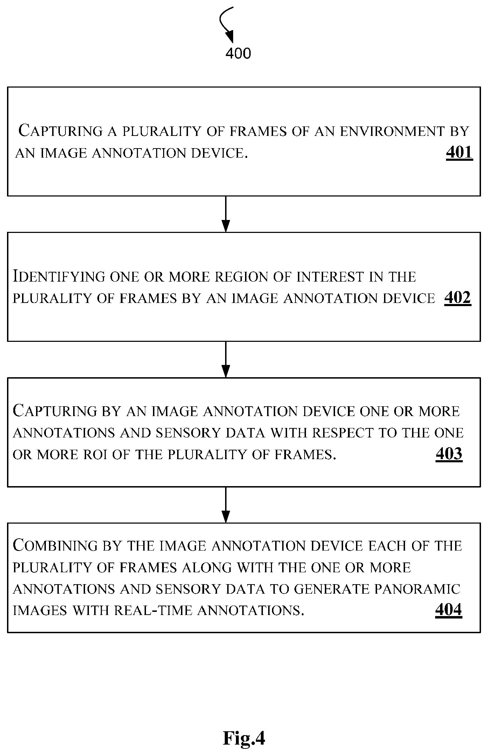

Fig.4 illustrates a flowchart showing the method for generating panoramic images with real-time annotations in accordance with some embodiments of present disclosure.

As illustrated in Fig.4, the method 400 comprises one or more blocks for generating panoramic images with real-time annotations. The method 400 may be described in the general context of computer executable instructions. Generally, computer executable instructions can include routines, programs, objects, components, data structures, procedures, modules, and functions, which perform particular functions or implement particular abstract data types.

The order in which the method 400 is described is not intended to be construed as a limitation, and any number of the described method blocks can be combined in any order to implement the method. Additionally, individual blocks may be deleted from the methods without departing from the spirit and scope of the subject matter described herein. Furthermore, the method can be implemented in any suitable hardware, software, firmware, or combination thereof.

The panoramic image of an environment with real-time annotations is created by an image annotation unit 103 present in the computing device 101.

A plurality of frames is captured by an image capturing unit 109 of the computing device 101 to generate a panoramic image.

At block 401, the plurality of frames of an environment is received by the image annotation unit 103 of the computing device 101.

At block 402, one or more Region of Interest (ROI) in the plurality of frames is identified by the image annotation unit 103. The Region of Interest (ROI) is the area or objects of interest in the frame which the user wishes to annotate in the panoramic image. In an embodiment, the Region of Interest (ROI) is either annotated in real time by the user or the ROI is auto-annotated by the image annotation unit 103 from the database.

In an embodiment, ROI identifiers are calculated for the identified region of interest and stored in the database.

At block 403, one or more annotations and sensory data related to the one or more ROI of the plurality of frames are captured by an image annotation unit 103 of the computing device 101. In an embodiment, the sensory data includes location information for the ROI, gyroscope and/or accelerometer data.

At block **404,** each of the plurality of frames along with the one or more annotations and sensory data is combined by the image annotation unit 103 for generating a panoramic image along with the real-time annotations. In an embodiment, the image annotation unit **103** determines and corrects any overlaps at the time of stitching two frames by using the Laplace of Gaussian.

In one embodiment the image annotation unit **103** determines any overlaps of one or more ROI during combining each of the plurality of frames.

In one embodiment, the image annotation unit **103** is configured to correct the overlap of one or more ROI by using the ROI identifiers, Laplace of Gaussian (LoG) values of the plurality of frames, ROI masks and overlap threshold.

Computing System

Figure 5 illustrates a block diagram of an exemplary computer system **500** for implementing embodiments consistent with the present disclosure. In an embodiment, the computer system **500** is used to implement the image annotation unit. The computer system **500** may comprise a central processing unit ("CPU" or "processor") **502.** The processor **502** may comprise at least one data processor for generating panoramic images with real-time annotations. The processor **502** may include specialized processing units such as integrated system (bus) controllers, memory management control units, floating point units, graphics processing units, digital signal processing units, etc.

The processor **502** may be disposed in communication with one or more input/output (I/O) devices (not shown) via I/O interface **501.** The I/O interface **501** may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface **501,** the computer system **500** may communicate with one or more I/O devices. For example, the input device may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system **500** consists of an image annotation unit. The processor **502** may be disposed in communication with the communication network **509** via a network interface **503.** The network interface **503** may communicate with the communication network **509.** The network interface **503** may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network **509** may include, without limitation, a direct interconnection, local area network (LAN), wide area network (WAN), wireless network (e.g., using Wireless Application Protocol), the Internet, etc. Using the network interface **503** and the communication network **509,** the computer system **500** may communicate with the database **514.** The network interface **503** may employ connection protocols include, but not limited to, direct connect, Ethernet (e.g., twisted pair 10/100/1000 Base T), transmission control protocol/internet protocol (TCP/IP), token ring, IEEE 802.11 a/b/g/n/x, etc.

The communication network **509** includes, but is not limited to, a direct interconnection, an e-commerce network, a peer to peer (P2P) network, local area network (LAN), wide area network (WAN), wireless network (e.g., using Wireless Application Protocol), the Internet, Wi-Fi and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor **502** may be disposed in communication with a memory **505** (e.g., RAM, ROM, etc. not shown in **figure 5)** via a storage interface **504.** The storage interface **504** may connect to memory **505** including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **505** may store a collection of program or database components, including, without limitation, user interface **506,** an operating system **507,** web server **508** etc. In some embodiments, computer system **500** may store user/application data **506,** such as the data, variables, records, etc. as described in this disclosure. Such databases may be implemented as fault-tolerant, relational, scalable, secure databases such as Oracle or Sybase.

The operating system **507** may facilitate resource management and operation of the computer system **500.** Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like.

In some embodiments, the computer system **500** may implement a web browser **508** stored program component. The web browser **508** may be a hypertext viewing application, such as Microsoft Internet Explorer, Google Chrome, Mozilla Firefox, Apple Safari, etc. Secure web browsing may be provided using Secure Hypertext Transport Protocol (HTTPS), Secure Sockets Layer (SSL), Transport Layer Security (TLS), etc. Web browsers **508** may utilize facilities such as AJAX, DHTML, Adobe Flash, JavaScript, Java, Application Programming Interfaces (APIs), etc. In some embodiments, the computer system **500** may implement a mail server stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system **500** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

An embodiment of the present disclosure generates panoramic images with real-time annotations.

The present disclosure helps in reducing the time for generating panoramic views.

In one embodiment, the image annotations unit provides features for correcting the overlapped frames during combining the plurality of frames to form a panoramic image with real-time annotations.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may comprise media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media comprise all computer-readable media except for a transitory. The code implementing the described operations may further be implemented in hardware logic (e.g., an integrated circuit chip, Programmable Gate Array (PGA), Application Specific Integrated Circuit (ASIC), etc.).

Still further, the code implementing the described operations may be implemented in "transmission signals", where transmission signals may propagate through space or through a transmission media, such as an optical fiber, copper wire, etc. The transmission signals in which the code or logic is encoded may further comprise a wireless signal, satellite transmission, radio waves, infrared signals, Bluetooth, etc. The transmission signals in which the code or logic is encoded is capable of being transmitted by a transmitting station and received by a receiving station, where the code or logic encoded in the transmission signal may be decoded and stored in hardware or a non-transitory computer readable medium at the receiving and transmitting stations or devices. An "article of manufacture" comprises non-transitory computer readable medium, hardware logic, and/or transmission signals in which code may be implemented. A device in which the code implementing the described embodiments of operations is encoded may comprise a computer readable medium or hardware logic. Of course, those skilled in the art will recognize that many modifications may be made to this configuration without departing from the scope of the invention, and that the article of manufacture may comprise suitable information bearing medium known in the art.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 4** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A processor-implemented method for generating panoramic images with real-time annotations, the method comprising:

   receiving a plurality of frames of an environment;
   identifying one or more Regions of Interest (ROI) in the plurality of frames;
   capturing one or more annotations and sensory data with respect to the one or more ROI of the plurality of frames; and

   combining each of the plurality of frames along with the one or more annotations and the sensory data to generate panoramic images with real-time annotations.

2. The method as claimed in claim 1, wherein combining each of the plurality of frames along with the one or more annotations and the sensory data comprises:

   determining overlap of the one or more ROI during combining each of the plurality of frames; and
   correcting the overlap of the one or more ROI by using Laplace of Gaussian (LoG) values of the plurality of frames, ROI masks and overlap threshold.

3. The method as claimed in claim 1 or claim 2, wherein the one or more ROI of the plurality of frames are provided by a user.

4. The method as claimed in any preceding claim, wherein the one or more ROI of the plurality of frames are provided by the image annotation device on identifying a predefined object of interest.

5. The method as claimed in any preceding claim, wherein the one or more ROI of the plurality of frames are provided for user selection.

6. The method as claimed in any preceding claim, wherein the sensory data comprises at least one of gyroscope data and accelerometer data.

7. The method as claimed in any preceding claim further comprising providing a frame for displaying from the plurality of frames based on the sensory data.

8. The method as claimed in any preceding claim further comprising providing a frame for displaying from the plurality of frames based on an object specified by a user from the ROI.

9. An image annotation device for generating panoramic images with real-time annotation, comprising:

a processor; and
a memory communicatively coupled to the processor, wherein the memory stores processor instructions, which, on execution, causes the processor to perform the method of any preceding claim.

10. A non-transitory computer readable medium including instruction stored thereon that when processed by at least one processor cause an image annotation unit to perform the method of any of claims 1 to 8.

100

COMPUTING DEVICE **101**

IMAGE ANNOTATION DEVICE **103**

I/O INTERFACE **111**

MEMORY **113**

PROCESSOR **115**

DISPLAY UNIT **107**

IMAGE CAPTURING UNIT **109**

SENSOR 1 **$110_1$**

○

○

SENSOR N **$110_N$**

DATABASE
**105**

**Fig.1**

IMAGE ANNOTATION DEVICE **103**

I/O INTERFACE **111**

PROCESSOR **115**

MEMORY **113**

DATA **201**

FRAME DATA **203**

REGION OF INTEREST DATA **205**

ANNOTATION DATA **207**

SENSORY DATA **209**

OTHER DATA **211**

MODULES **213**

RECEIVING MODULE **215**

ROI IDENTIFICATION MODULE **217**

COMBINING MODULE **219**

CORRECTION MODULE **221**

RENDERING MODULE **223**

OTHER MODULE **225**

**Fig.2**

COMPUTING ROI IDENTIFIERS FOR ONE OR MORE ROI'S WHILE
CAPTURING PLURALITY OF FRAMES                                    **301**

COMPUTING ROI IDENTIFIERS FOR ONE OR MORE ROI'S WHILE
STITCHING PLURALITY OF FRAMES                                    **303**

ANALYZING THE ROI IDENTIFIERS BASED ON THE COMPUTATION
WHILE CAPTURING ROI'S AND STITCHING THE FRAMES TO
DETERMINE OVERLAPPING PERCENTAGE.
                                                                **305**

TRUE  ◇ ARE THE ROI'S UNDER OVERLAPPING AREA? **307** ◇  FALSE

IDENTIFYING THE REGION OF
OVERLAPPING BASED ON
THE OVERLAPPING
PERCENTAGE.
**311**

STITCHING PLURALITY OF
FRAMES WITH THE
IDENTIFIED ROI'S WITHOUT
ANY CORRECTION.
**309**

CORRECTING THE OVERLAP
BY COUNTERING THE
OVERLAPPING AREA IN
OTHER FRAME STITCHED
WITH THE FRAME
CONTAINING ROI'S.
**313**

**Fig.3**

400

CAPTURING A PLURALITY OF FRAMES OF AN ENVIRONMENT BY AN IMAGE ANNOTATION DEVICE.                **401**

IDENTIFYING ONE OR MORE REGION OF INTEREST IN THE PLURALITY OF FRAMES BY AN IMAGE ANNOTATION DEVICE **402**

CAPTURING BY AN IMAGE ANNOTATION DEVICE ONE OR MORE ANNOTATIONS AND SENSORY DATA WITH RESPECT TO THE ONE OR MORE ROI OF THE PLURALITY OF FRAMES.                **403**

COMBINING BY THE IMAGE ANNOTATION DEVICE EACH OF THE PLURALITY OF FRAMES ALONG WITH THE ONE OR MORE ANNOTATIONS AND SENSORY DATA TO GENERATE PANORAMIC IMAGES WITH REAL-TIME ANNOTATIONS.                **404**

**Fig.4**

INPUT
DEVICES
**512**

OUTPUT
DEVICES
**513**

I/O INTERFACE
**501**

PROCESSOR
**502**

NETWORK
INTERFACE
**503**

COMMUNICATION
NETWORK **509**

DATABASE **514**

STORAGE INTERFACE **504**

MEMORY **505**

USER INTERFACE **506**

OPERATING SYSTEM **507**

WEB BROWSER **508**

COMPUTING SYSTEM **500**

**Fig.5**

Europäisches
Patentamt

European
Patent Office

Office européen
des brevets

# EUROPEAN SEARCH REPORT

**Application Number**

EP 16 15 3977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HYEJIN KIM ET AL: "IMAF: in situ indoor modeling and annotation framework on mobile phones", PERSONAL AND UBIQUITOUS COMPUTING, vol. 17, no. 3, 7 April 2012 (2012-04-07), pages 571-582, XP55335621, GB * page 573, left-hand column, paragraph 4 - page 574, left-hand column, paragraph 2 * * page 577, left-hand column, paragraph 4; figures 13, 16 * | 1-10 | INV. G06T3/40 |
| X | WITHER J ET AL: "Fast annotation and modeling with a single-point laser range finder", MIXED AND AUGMENTED REALITY, 2008. ISMAR 2008. 7TH IEEE/ACM INTERNATIONAL SYMPOSIUM ON, IEEE, PISCATAWAY, NJ, USA, 15 September 2008 (2008-09-15), pages 65-68, XP031343975, * page 66, right-hand column, paragraph 5 - page 67, left-hand column, paragraph 2 * | 1-10 | |
| | | | TECHNICAL FIELDS SEARCHED (IPC) |
| | | | G06T |
| X | JASON WITHER ET AL: "Using aerial photographs for improved mobile AR annotation", MIXED AND AUGMENTED REALITY, 2006. ISMAR 2006. IEEE/ACM INTERNATIONAL SYMPOSIUM ON, IEEE, PI, 1 October 2006 (2006-10-01), pages 159-162, XP031014664, * page 160, right-hand column, last paragraph - page 161, left-hand column, paragraph 4 * | 1-10 | |

-/--

The present search report has been drawn up for all claims

| Place of search | Date of completion of the search | Examiner |
|---|---|---|
| Munich | 17 January 2017 | Pierfederici, A |

EPO FORM 1503 03.82 (P04C01)

Europäisches
Patentamt

European
Patent Office

Office européen
des brevets

## EUROPEAN SEARCH REPORT

Application Number

EP 16 15 3977

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TOBIAS LANGLOTZ ET AL: "Sketching up the world: in situ authoring for mobile Augmented Reality", PERSONAL AND UBIQUITOUS COMPUTING, SPRINGER VERLAG, LO, vol. 16, no. 6, 27 July 2011 (2011-07-27), pages 623-630, XP035089423, * page 626, left-hand column, paragraph 1 - page 629, left-hand column, paragraph 4 * | 1-10 | |
| X | US 2009/232417 A1 (MCMAHAN DAVID MICHAEL [US]) 17 September 2009 (2009-09-17) * paragraph [0004] - paragraph [0022] * * paragraph [0028] * | 1-10 | |
| A | US 2010/122208 A1 (HERR ADAM [US] ET AL) 13 May 2010 (2010-05-13) * abstract * * paragraph [0069] * | 1-10 | |
| A | US 2014/164927 A1 (SALAVERRY ROBERT [US] ET AL) 12 June 2014 (2014-06-12) * paragraph [0097] * | 1-10 | TECHNICAL FIELDS SEARCHED (IPC) |

The present search report has been drawn up for all claims

| Place of search | Date of completion of the search | Examiner |
|---|---|---|
| Munich | 17 January 2017 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 3977

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2017

| Patent document cited in search report | Publication date | Patent family member(s) | Publication date |
|---|---|---|---|
| US 2009232417 A1 | 17-09-2009 | US 2009232417 A1<br>WO 2009114036 A1 | 17-09-2009<br>17-09-2009 |
| US 2010122208 A1 | 13-05-2010 | NONE | |
| US 2014164927 A1 | 12-06-2014 | US 2014164927 A1<br>US 2014348394 A1<br>WO 2013049374 A2 | 12-06-2014<br>27-11-2014<br>04-04-2013 |

EPO FORM P0459

For more details about this annex : see Official Journal of the European Patent Office, No. 12/82